# EUROPEAN PATENT APPLICATION

(11) **EP 1 321 390 A1**
(43) Date of publication of application: **25.06.2003**
(21) Application number: 02025020.5
(22) Date of filing: 08.11.2002
(51) Int. Cl.: B65G 21/14, B65G 23/04

(54) **Adjustable pulley drive**

(30) Priority: 21.12.2001 IT BO20010771
(71) Applicant: M.C. s.r.l., 48018 Faenza (Ravenna) (IT)
(72) Inventor: Valentini, Vladimiro, 48018 Faenza (Ravenna) (IT); Neri, Ermes, 48018 Faenza (Ravenna) (IT)
(74) Representative: Modiano, Guido, Dr.-Ing.

(57) **Abstract**

An adjustable pulley drive comprising a straight track (2) for slidingly guiding a first carriage (3) and a second carriage (4), which rotatably support respectively a first pulley (5) and a second pulley (6) which are coaxial, the carriages being associated with articulated translational motion means (26) in order to adjust the axial distance between the pulleys (5, 6).

## Description

The present invention relates to an adjustable pulley drive, particularly for products conveyor belts.

Products conveyance lines that use belts driven by pulleys are generally widespread: the products are usually conveyed on parallel active upper portions of two or more of such belts, which wind around respective facing and coaxial pulleys driven by corresponding drives.

The conveyance lines must meet requirements of flexibility and versatility, since quite often it is necessary to transfer products whose dimensions vary even considerably.

Currently, in order to be able to adapt the conveyance line to the dimensions of the product, one usually acts on the mutual axial distance between the pulleys, which can be mounted so as to be driving pulleys or idler pulleys on a same shaft, along which they can slide: after stopping the line, it is necessary to manually position the pulleys along such shaft in order to move the upper active portions of the belts mutually closer or further apart.

This procedure, which is often awkward and laborious, entails a considerable expenditure of time, since it is necessary to stop the line, which often can be quite long, in order to reposition all the pulleys manually.

Moreover, since these lines generally have side walls for guiding the advancement of the products, it is also necessary to adjust manually, often with poor precision, the distance of said side walls with respect to the respective pulleys.

The aim of the present invention is to obviate the above cited drawbacks by providing a pulley drive in which the mutual distance between the pulleys can be adjusted rapidly and precisely.

Within this aim, an object of the present invention is to provide a pulley drive in which the mutual distance between the pulleys is adjustable without requiring manual interventions and even while the conveyance line is moving.

Another object of the present invention is to provide a pulley drive with side walls for guiding the advancement of the products whose distance from the respective pulleys can be adjusted precisely and without manual interventions.

Another object of the present invention is to provide an adjustable pulley drive whose structure is simple, relatively easy to provide in practice, safe in use, effective in operation, and relatively low in cost.

This aim and these and other objects which will become better apparent hereinafter are achieved by the present adjustable pulley drive, characterized in that it comprises a straight track for slidingly guiding a first carriage and a second carriage, which rotatably support respectively a first pulley and a second pulley which are coaxial, said first and second carriages being associated with articulated translational motion means in order to adjust the axial distance between said first and second pulleys.

Further characteristics and advantages will become better apparent from the detailed description of a preferred but not exclusive embodiment of an adjustable pulley drive according to the invention, illustrated only by way of non-limitative example in the accompanying drawings, wherein:
Figure 1 is a front view of the adjustable pulley drive according to the invention;
Figure 2 is a partially sectional side elevation view of the drive;
Figure 3 is a bottom view of the drive.

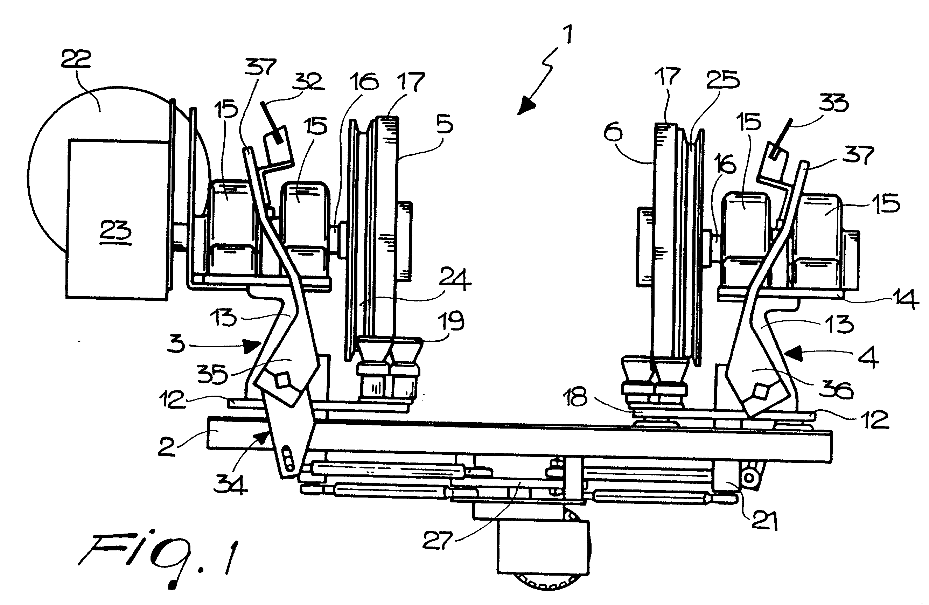

With particular reference to Figure 1, the reference numeral 1 generally designates an adjustable pulley drive according to the invention.

The drive comprises a horizontal straight track 2, which lies transversely to the direction of the motion of the products, for slidingly guiding a first carriage 3 and a second carriage 4, which rotatably support respectively a first pulley 5 and a second pulley 6 and can move from a minimum opening position, in which they are mutually adjacent, to a maximum opening position, in which they are arranged at the opposite ends of the track 2.

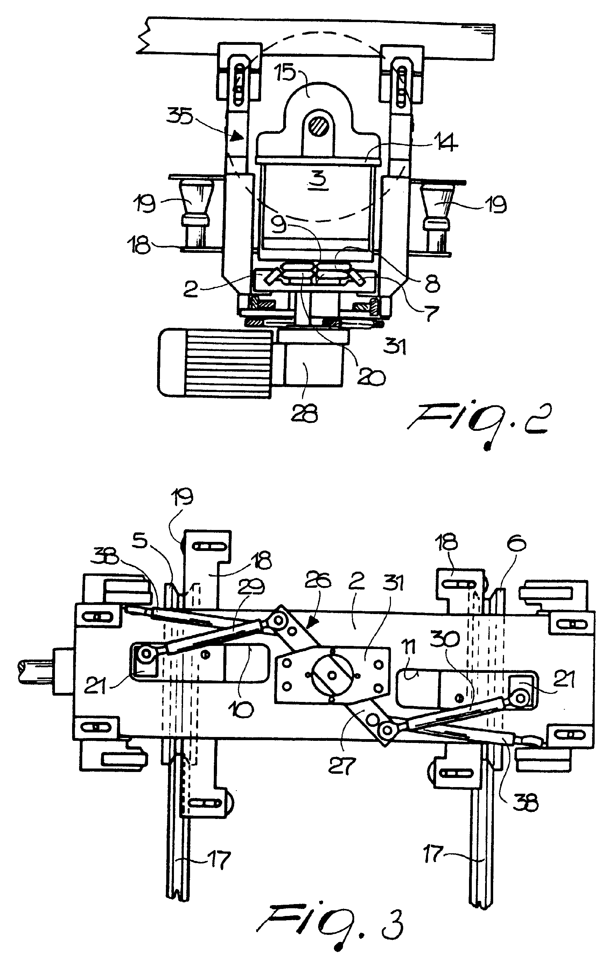

The track 2 (Figure 2) has a transverse cross-section that is shaped substantially like a flattened U and is provided internally, and on the opposite wings, with bars 7, which are shaped substantially like a parallelepiped and are adapted to constitute rolling profiles 8 for the carriages 3 and 4. The track 2 further has on the bottom 9, and in substantially symmetrical positions with respect to the centerline, a first slot 10 and a second slot 11; such slots are longitudinal and substantially rectangular (Figure 3).

Each one of the carriages 3 and 4 is constituted by a rectangular lower plate 12, which is extended vertically by means of a footing 13 for a corresponding upper plate 14, on which two rotatable supports 15 are fixed; supports 15 are arranged side by side and coaxial and are designed to support shafts 16 for the keying of the respective pulleys 5 and 6, which are of the type with a trapezoidal race for winding a belt 17.

Each one of the lower plates 12 is extended, on the two sides that are parallel to the track 2, by wings 18 for the rotatable support of respective rollers 19 that have a vertical axis and are adapted to keep in the correctly wound position the belts 17 (Figures 2 and 3). Each one of the lower plates 12, further supports, so that they can rotate in a downward region, at least one pair of wheels 20 that have an annular race 20 with a vertical axis, for rolling along the profiles 8; each plate 12 has a downward extension 21 that is shaped substantially like a parallelepiped, can move along the respective slot 10 or 11 of the track 2, and protrudes downward with respect to said track.

The first pulley 5, which is for example a driving pulley because it is keyed to the shaft of a driving motor 22 that is associated with a corresponding gearbox 23, is coupled to a respective first auxiliary pulley 24, which is coaxial and laterally adjacent, for connection between two adjacent portions of the line; the second pulley 6 is, for example, supported so that it can rotate freely and is associated with a respective second auxiliary pulley 25, which is coaxial and laterally adjacent.

The first carriage 3 and the second carriage 4 are associated with articulated translational motion means 26 for adjusting the axial distance between the pulleys; said means are adapted to produce movements of the first and second carriages 3 and 4 in opposite directions. The means 26 comprise (Figure 3) a crank 27, which is keyed to the output shaft of a gearmotor 28 that has a vertical axis; a first end of said crank is articulated to the downward extension 21 of the first carriage 3 by means of a first linkage 29, and a second end of said crank is articulated to the downward extension of the second carriage 4 by way of a second linkage 30; the gearmotor 28 is supported by a frame 31, which is fixed in a downward region substantially at the centerline of the track 2.

The drive is provided with a first side wall 32 and with a second side wall 33, which are designed to guide the advancement of the products on the belts 17 and are associated with means 34 for adjusting the distance with respect to the respective pulleys 5 and 6. The adjustment means 34 comprise a first support 35 and a second support 36, respectively for the first and second side walls 32 and 33, each of which comprises two parallel arms 37, which are rigidly coupled to the top of the respective side wall, are rotatably supported so as to oscillate in an intermediate portion in the respective carriage 3 or 4, and are articulated in a downward region with respect to the first end portion of a respective rod 38 (Figure 3). The rod is articulated, in the corresponding second end portion, to a respective end of the crank 27, in a region that lies between the centerline of said crank and the point of articulation to the corresponding linkage 29 and 30.

The adjustment means 34 are adapted to arrange the first side wall 32 and the second side wall 33 at a distance from, respectively, the first pulley 5 and the second pulley 6 that is smallest when the first and second carriages 3 and 4 are mutually adjacent in the least open position and is greatest when the first and second carriages are located at the opposite ends of the track 2 in the fully open position, said distance increasing gradually in each intermediate open position.

The operation of the drive according to the invention is as follows: the mutual axial distance between the pulleys 5 and 6 can be changed appropriately, even while said pulleys are moving and driven by the actuator motor 22, simply by acting on the gearmotor 28, which by turning the crank 27 allows to perform a translational motion in opposite directions of the first and second carriages 3 and 4, in the opening or closing direction; accordingly, the side walls 32 and 33 also can be moved mutually closer or further apart with respect to the pulleys, by way of the articulation of the supports 35 and 36 to the respective rods 38.

As an alternative, the second pulley 6 also can be a driving pulley by way of a coupling to a corresponding actuation motor, according to the functional requirements of the conveyance line.

The adjustable pulley drive allows to adjust the axial distance between the pulleys 5 and 6 and the distance between the side walls 32 and 33 rapidly and without manual actions even while the conveyance line is moving, simplifying and shortening significantly the procedures for adapting the line to the dimensions of the product.

It has thus been shown that the invention achieves the intended aim and objects.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the appended claims.

The disclosures in Italian Patent Application No. BO2001A000771 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An adjustable pulley drive, **characterized in that** it comprises a straight track (2) for slidingly guiding a first carriage (3) and a second carriage (4), which rotatably support respectively a first pulley (5) and a second pulley (6) which are coaxial, said carriages being associated with articulated translational motion means (26) in order to adjust the axial distance between said pulleys (5, 6).

2. The adjustable pulley drive according to claim 1, particularly for product conveyor belts, **characterized in that** it comprises a first side wall (32) and a second side wall (33), which are arranged laterally with respect to said track (2) and are associated with means (34) for adjusting the distance respectively from said first pulley (5) and from said second pulley (6).

3. The drive according to claim 1, **characterized in that** said articulated translational motion means (26) comprise a crank (27) that is keyed substantially at its centerline on the output shaft of a gearmotor (28) whose axis is perpendicular to said track (2), said crank (27) having a first end that is articulated to said first carriage (3) by way of a first linkage (29) and a second end that is articulated to said second carriage (4) by way of a second linkage (30).

4. The drive according to claim 3, **characterized in that** said gearmotor (28) is supported, in a downward region, substantially in the central portion of said rail (2), which has, at its respective sides, a first longitudinal slot (10) and a second longitudinal slot (11) for the sliding of respective downward extensions (21) of said first and second carriages (3, 4), adapted for articulation to said first and second linkages (29, 30) respectively.

5. The drive according to claim 1, **characterized in that** said track (2) has a substantially U-shaped transverse cross-section and is provided internally with two rolling profiles (8) for respective wheels (20) that have a vertical axis and are supported rotatably in said first and second carriages (3, 4).

6. The drive according to claim 1, **characterized in that** said first pulley (5) is a driving pulley, since it is keyed on the shaft of an actuation motor (22) with a corresponding gearbox (23) that is rigidly coupled to said first carriage (3), said second pulley (6) being supported so that it can rotate freely on said second carriage (4).

7. The drive according to claim 2, **characterized in that** said adjustment means (34) comprise a first support (35) and a second support (36), respectively for said first and second side walls (32, 33), each of which comprises two parallel arms (37) that are rigidly coupled, at the top, to a respective shoulder, said arms (37) being supported rotatably so that they oscillate in an intermediate portion on a respective carriage (3, 4) and being articulated in a downward region with respect to the first end portion of a respective rod (38), said rod being articulated, in the second end portion, to a respective end of said crank (27).

8. The drive according to claim 2, **characterized in that** said adjustment means (34) are suitable to arrange said first and second side walls (32, 33) at a distance from, respectively, said first and second pulleys (5, 6) that is smallest when said first and second carriages (3, 4) are mutually adjacent in a least open position, and is greatest when said first and second carriages (3, 4) are located at the opposite ends of said track (2) in a fully open position, said distance increasing gradually in each intermediate open position.
